# EUROPEAN PATENT APPLICATION

(11) **EP 2 242 251 A1**
(43) Date of publication of application: **20.10.2010**
(21) Application number: 09251119.5
(22) Date of filing: 17.04.2009
(51) Int. Cl.: H04N 5/225, G03B 17/54, H04N 5/74

(54) **Audio/video capturing device having projecting function**

(71) Applicant: Aiptek International Inc., Hsin-Chu (TW)
(72) Inventor: Chen, Wei-Hong, Zhubei City, Hsin-Chu County 302 (TW)
(74) Representative: Pratt, David Martin

(57) **Abstract**

An audio/video capturing device having a projecting function comprises a control unit, an audio/video module, an audio/video processing unit, a memory module, a projection module, a display module, an integrated connection unit, an operation interface, and a power module. The audio/video module is coupled with the control unit and configured to capture an external image and an audio signal and convert them into digital audio/video signals. The audio/video processing unit is configured to process the digital audio/video signals and store them in the memory module. The integrated connection unit connects the projection module and the display module to the control unit so that the digital audio/video signals can be previewed via the display module. The control unit is controlled via the operation interface so as to execute a command whereby the projection module and the audio capturing/playback unit projects outward and plays back the digital audio/video signals.

## Description

### BACKGROUND OF INVENTION

### 1. FIELD OF THE INVENTION

The present invention relates to audio/video capturing devices. More particularly, the present invention relates to an audio/video capturing device having a projecting function, wherein a projection module and an audio capturing/playback unit projects outward and plays back an image and an audio signal captured by the audio/video capturing device, respectively.

### 2. DESCRIPTION OF THE PRIOR ART

A conventional photographic device, such as a digital video camera (DV) or a digital still camera (DSC), is configured for capturing external moving or still images, performing audio/video digitization and conversion, and then storing the converted digital data in a memory of the photographic device so that an operator can preview the moving or still images via a screen of the photographic device. If it is desired to project the captured images outward for a briefing or presentation, it is necessary to use a transmission cable to transmit the moving or still images from the photographic device to a computer. The computer processes and converts the moving or still images into appropriate formats by means of applicable driving and editing programs, before the moving or still images are projected for display by a digital projector coupled with the computer.

Therefore, in order to deliver a projection presentation in a public place, such as at a conference, hardware such as a mobile computer and a digital projector must be carried to the site to project audio/video files obtained through a photographic device. Hence, it is necessary to not only edit the audio/video files in advance with a computer and store the files thereinto, but also carry all the equipments required for digital projection wherever the presentation is to be delivered. However, the process of transmitting, converting, and processing digital data is rather complicated, and it is very inconvenient to carry the various heavy equipments around. Therefore, the present invention aims to integrate a photographic device and a projection device into one unit and further downsize the overall weight of the integrated unit.

### SUMMARY OF INVENTION

The primary objective of the present invention is to provide an audio/video capturing device having a projecting function so that digital audio/video files produced by the audio/video capturing device through capturing and converting external images and audio sounds can be projected outward and played back by a projection module and an audio capturing/playback unit of the audio/video capturing device.

In order to achieve the aforementioned objective, the present invention disclosed an audio/video capturing device having a projecting function which comprises:
a control unit which includes a central processing unit for providing audio/video editing and playback control;
an image capturing unit which is an optoelectronic converting device coupled with the control unit so as to capture an external image and convert the external image into a digital image signal;
an audio capturing/playback unit comprising a microphone and a loudspeaker which are configured to capture an external audio signal and play back an audio signal, respectively, and are coupled with the control unit;
an audio/video processing unit coupled with the control unit and configured to store audio/video editing software and processed digital audio/video signals;
a memory module coupled with the control unit and configured to store digital audio/video data;
a projection module comprising an LED projection unit, a beam expanding unit, a refraction unit, an imaging unit, and a projection lens, wherein a light beam is projected by the LED projection unit through the beam expanding unit and refracted by the refraction unit to the imaging unit so that the imaging unit reflects the light beam through the refraction unit along with the digital image signal produced by the image capturing unit, thus projecting the digital image signal outward through the projection lens;
a display module for outputting the digital image;
an integrated connection unit for coupling the projection module and the display module to the control unit;
an operation interface for enabling input of a control signal for controlling the control unit; and
a power module for providing necessary electric power to the audio/video capturing device.

### BRIEF DESCRIPTION OF THE DRAWINGS

The invention as well as a preferred mode of use, further objectives, and advantages thereof will be best understood by referring to the following detailed description of an illustrative embodiment in conjunction with the accompanying drawings, wherein:
FIG. 1 is a schematic structural diagram of an audio/video capturing device having a projecting function according to the present invention;
FIG. 2 is a schematic structural diagram of a projection module according to the present invention;
FIG. 3 is a flowchart for the audio/video capturing device according to the present invention;
FIG. 4 schematically illustrates parameter setting of an event processor of the audio/video capturing device according to the present invention;
FIG. 5 is a perspective view of the audio/video capturing device according to the present invention; and
FIG. 6 schematically shows a heat-dissipation device according to the present invention.

### DETAILED DESCRIPTION OF THE PREFERRED EMBODIMENT

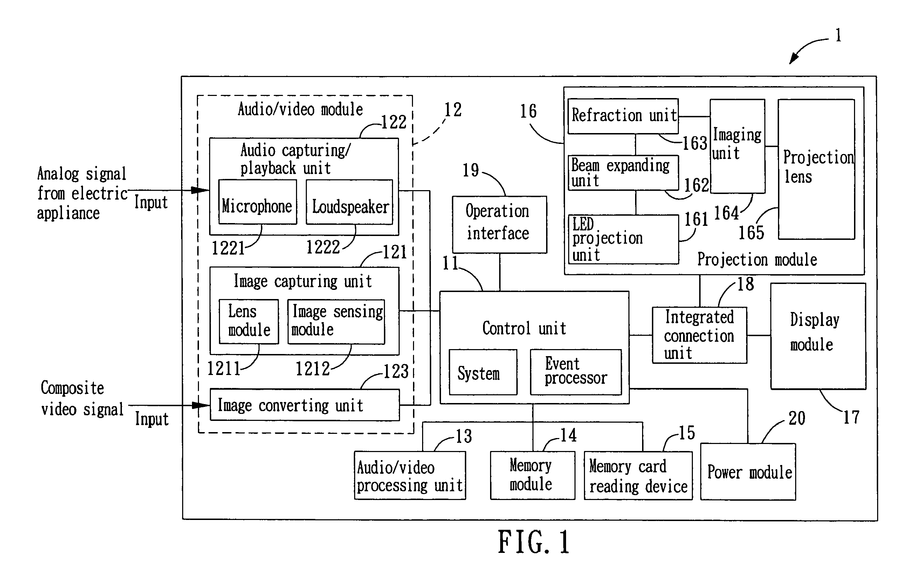

Referring to FIG 1, an audio/video capturing device 1 having a projecting function according to the present invention is integrated with functions of a digital video camera, a digital still camera, and a projector and includes a control unit 11, an audio/video module 12, an audio/video processing unit 13, a memory module 14, a memory card reading device 15, such as a memory card expansion slot shown in FIG 1, a projection module 16, a display module 17, an integrated connection unit 18, an operation interface 19, and a power module 20.

The control unit 11 is a central processing unit (CPU) for providing audio/video editing and playback control and is built-in with a system and an event processor. The control unit 11 provides digital coding, executes various audio/video softwares, and can rapidly process (e.g., capture, integrate, compress, and decode) images and audio signals. The audio/video module 12 is coupled with the control unit 11 and includes an image capturing unit 121, an audio capturing/playback unit 122, and an image converting unit 123.

The image capturing unit 121 is an optoelectronic converting device coupled with the control unit 11 and configured to capture an external image and convert the external image into a digital image signal. The image capturing unit 121 includes a lens module 1211 and an image sensing module 1212. The image sensing module 1212 senses the external image through the lens module 1211 so as to carry out motion-picture photography or still photography. The image sensing module 1212 is a charge-coupled device (CCD) sensor or a complementary metal-oxide semiconductor (CMOS) sensor.

The audio capturing/playback unit 122 includes a microphone 1221 and a loudspeaker 1222 which are configured to capture an external audio signal and play back a digital audio signal, respectively, and are electrically connected to the control unit 11. Also, the audio capturing/playback unit 122 converts analog signals inputted externally from various kinds of electric appliances (such as television sets, DVD players, MP3 players, and so on) into digital signals that can be processed by the control unit 11.

The microphone 1221 receives external audio sounds, including human voice, transmitted through air and then converts the audio signal into a digital signal that can be processed by the control unit 11. The loudspeaker 1222 converts a digital audio signal outputted from the control unit 11 into an analog audio signal audible to the human ear. In addition, while the image capturing unit 121 is capturing an image, the microphone 1221 can capture an audio signal synchronously, and the audio signal recorded can be played back by the loudspeaker 1222 synchronously with the displaying of the digital image recorded.

The image converting unit 123 is electrically connected to the control unit 11 and is configured to convert an externally inputted composite video signal into a digital image signal. In other words, the image converting unit 123 converts an image data file inputted from an external multimedia image device into a digital image signal so that subsequent file editing and conversion is carried out by the control unit 11.

The audio/video processing unit 13, the memory module 14, and the memory card reading device 15 are electrically connected to the control unit 11, respectively. The audio/video processing unit 13 is configured to store audio/video editing software and, through the control unit 11, store processed digital audio/video signals in the memory module 14 or a memory card connected with the memory card reading device 15.

The memory module 14 is built in the audio/video capturing device 1 and configured to store digital audio/video data transmitted from the control unit 11. The memory module 14 is a rewritable non-volatile memory, flash memory, electric programmable read-only memory (EPROM), or Micro-HD.

The memory card reading device 15 is configured to electrically connect storage media of different specifications to the control unit 11. The memory card reading device 15 can read at least one of the following types of memory cards: CF, MICRO DRIVE, SD, mini SD, MMC, RS-MMC, XD, MS, MS PRO, MS Duo, MS Duo pro, and SM. The memory card reading device 15 enables cross-platform information exchange with an external multimedia audio/video device which uses a specific type of memory cards for storing digital image files.

The projection module 16 is configured to project a digital image outward and includes an LED projection unit 161, a beam expanding unit 162, a refraction unit 163, an imaging unit 164, and a projection lens 165. A light beam is projected by the LED projection unit 161 through the beam expanding unit 162 and then refracted by the refraction unit 163 so as to reach the imaging unit 164. The imaging unit 164 reflects the light beam through the refraction unit 163 along with a digital image so that the digital image is projected outward through the projection lens 165.

The display module 17 is configured to output a digital image in the audio/video capturing device 1 for preview and can be a liquid crystal display (LCD) device. Moreover, while the projection module 16 is projecting a digital image, the display module 17 can synchronously display the same digital image projected by the projection module 16, so that the display module 17 also serves as a screen for further preview operations. In the mean time, the loudspeaker 1222 plays back audio sounds synchronously with the displaying of the digital image. For example, the display module 17 can be an LCD touch screen directly through which audio/video editing is performed. Additionally, the LCD touch screen may provide a light point or arrow (similar to a mouse-controlled cursor on a computer screen) to be operated via the LCD touch screen and used as an indicator during a projection presentation conducted through the projection module 16.

The integrated connection unit 18 couples and electrically connects the projection module 16 and the display module 17 to the control unit 11. The integrated connection unit 18 also serves as a bridge between the projection module 16 and the display module 17, thus enabling synchronous digital image communication between the projection module 16 and the display module 17 via the control unit 11.

The operation interface 19 is a mechanical pushbutton switch or a touch control pushbutton switch. A user can input a control command into the operation interface 19 so as to operate the control unit 11 and thereby instruct the audio/video capturing device 1 to record, play back, and project outward digital audio/video signals.

The power module 20 provides necessary electric power to the audio/video capturing device 1. It is understood that the audio/video capturing device 1 can be externally connected to a 110V domestic AC power supply and use an external transformer to convert the AC voltage into a DC operating voltage as required by the audio/video capturing device 1. Alternatively, the power module 20 can be a lithium battery, a nickel-metal hydride battery, a hydrogen-oxygen battery, a carbon-zinc battery, a nickel-cadmium battery, a fuel cell, or a rechargeable battery.

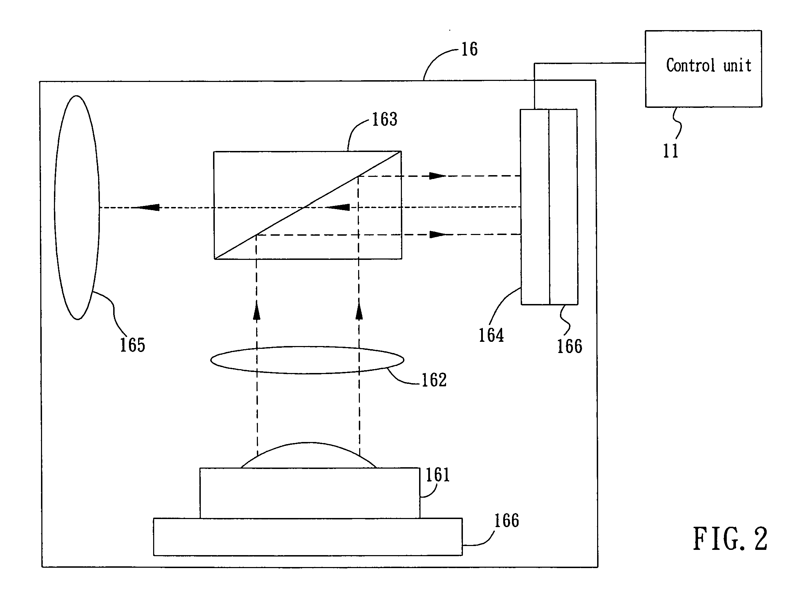

Please refer to FIG 2 for the projection module 16 of the audio/video capturing device 1 according to the present invention. Therein, the LED projection unit 161 is composed of white LEDs. The LEDs have a service life at least 30% longer than the halogen light bulb used in a conventional projector. In addition to being more power-saving and more environmentally friendly than the halogen light bulb, the LEDs can be turned on and off instantly and do not require a complicated heat dissipation procedure. As shown in FIG. 2, the LED projection unit 161, which generates a large amount of heat during operation, is installed on a heat dissipation device 166 for rapid heat dissipation from the LED projection unit 161 so as to lower the temperature, and extend the service life, of the LEDs.

As mentioned above, the LED projection unit 161 projects a light beam through the beam expanding unit 162. The light beam is expanded and homogenized by the light beam expanding unit 162 before reaching the refraction unit 163. The refraction unit 163 polarizes the light beam projected by the LED projection unit 161 and refracts the polarized light beam to the imaging unit 164. The imaging unit 164 reflects the polarized light beam to the projection lens 165 along with a digital image transmitted from the control unit 11 so that the digital image is projected outward through the projection lens 165 onto an external screen.

The imaging unit 164 is coupled to the control unit 11 by a bus line so as to enable transmission of digital image data. Since the imaging unit 164 tends to generate high heat during the imaging process, the imaging unit 164, like the LED projection unit 161, is generally installed on a heat dissipation device 166 to ensure constant operating temperature of the imaging unit 164. Thus, as shown in FIG. 1, the audio/video capturing device 1 according to the present invention can project outward, via the projection module 16, a digital image signal produced by the audio/video module 12 through capturing and converting an external image while the loudspeaker 1222 of the audio capturing/playback unit 122 plays back an audio signal synchronously with the projection of the digital image signal, thereby achieving the function of a miniature projector.

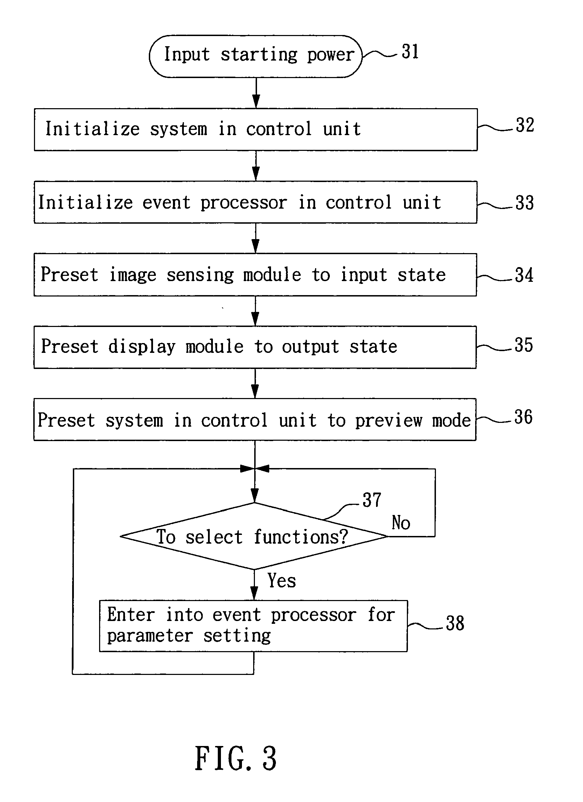

Please refer to FIG 3 for a flowchart for the audio/video capturing device 1 according to the present invention, wherein the flowchart includes the following steps:
Step (31): to input a starting power;
Step (32): to initialize the system in the control unit 11;
Step (33): to initialize the event processor in the control unit 11;
Step (34): to preset the image sensing module 1212 to an input state;
Step (35): to preset the display module 17 to an output state;
Step (36): to preset the system in the control unit 11 to a preview mode;
Step (37): to determine whether or not to select functions; and go to Step (38) if "yes", or keep displaying the menu of Step (37) if "no"; and
Step (38): to enter into the event processor for parameter setting, and return to the menu of Step (37) when the parameter setting is completed.

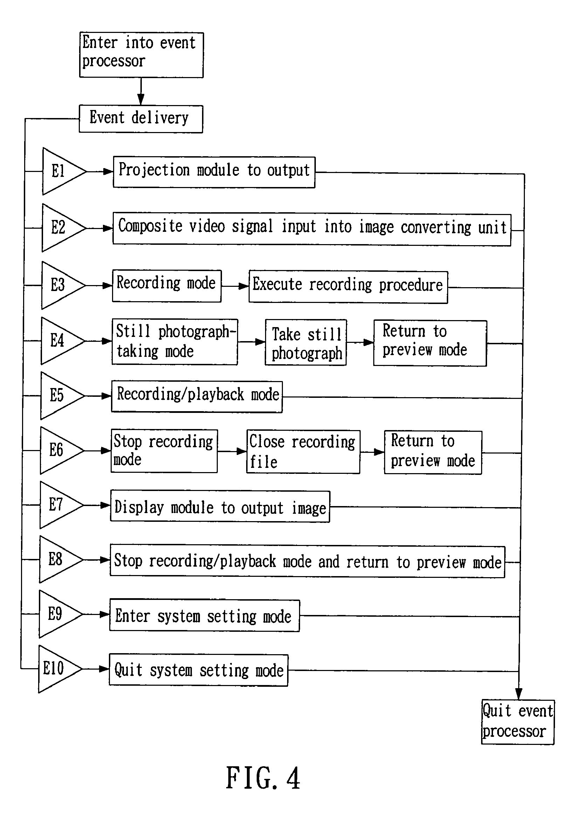

Referring to FIG. 4, the parameter setting in the event processor at Step (38) includes the following options:
Parameter E1: a setting for the projection module 16 to output;
Parameter E2: a setting for composite video signal input (audio/video signal input) into the image converting unit 123;
Parameter E3: a setting for entering a recording mode (motion-picture photography) and executing a recording procedure;
Parameter E4: a setting for entering a still photograph-taking mode (still photography), taking still photographs, and then returning to the preview mode;
Parameter E5: a setting for entering a recording/playback mode;
Parameter E6: a setting for stopping the recording mode, closing the recording file in use, and returning to the preview mode;
Parameter E7: a setting for the display module 17 to output an image;
Parameter E8: a setting for stopping the recording/playback mode and returning to the preview mode;
Parameter E9: a setting for entering a system setting mode; and
Parameter E10: a setting for quitting the system setting mode.

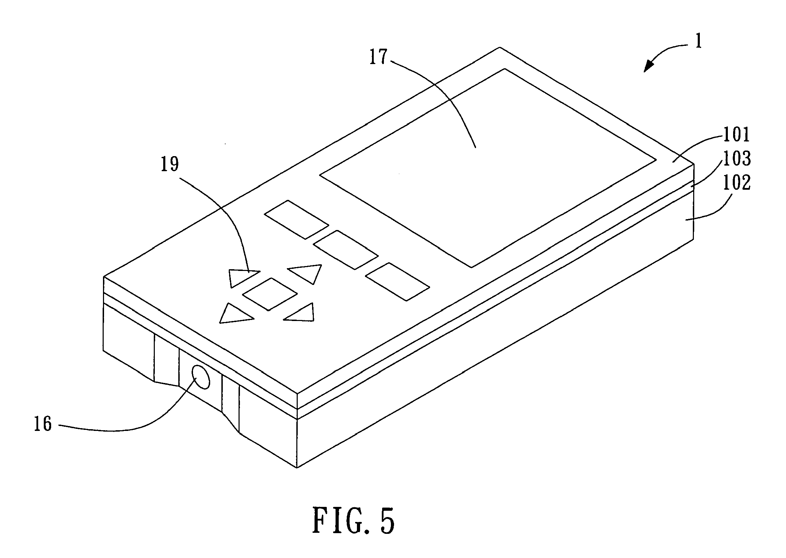

As shown in FIG. 5, the audio/video capturing device 1 further includes: an upper cover 101, a lower cover 102, and a middle frame 103 jointly forming a hallow housing for receiving the various components shown in FIG. 1, namely the control unit 11, the audio/video module 12, the audio/video processing unit 13, the memory module 14, the memory card reading device 15, the projection module 16, the display module 17, the integrated connection unit 18, the operation interface 19, and the power module 20.

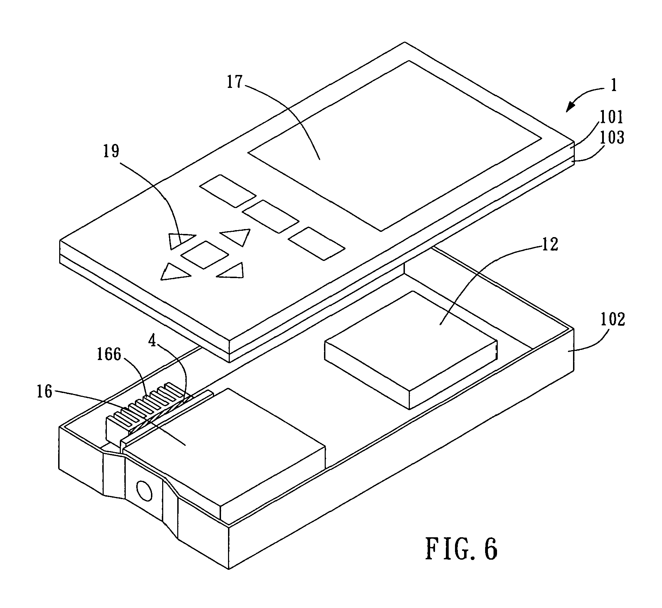

The upper cover 101 is configured mainly to assemble with the display module 17 and the operation interface 19 so that an image can be previewed via the upper cover 101 by operating the operation interface 19. The middle frame 103 is sandwiched between the lower cover 102 and the upper cover 101 and is made of stainless steel for example, so as to serve both heat-dissipation and esthetic purposes. The lower cover 102 is configured mainly to assemble with the audio/video module 12 (shown more clearly in FIG. 6) and the projection module 16.

Referring to FIG. 6, the heat dissipation device 166 attached to the projection module 16 is fin-shaped and integrally formed with the lower cover 102 of the audio/video capturing device 1. The lower cover 102 is made of metal to enhance esthetics and complement the heat dissipation function of the heat dissipation device 166. For example, the lower cover 102 and the heat dissipation device 166 are made of aluminum, aluminum alloy, copper, or stainless steel. In the preferred embodiment of the present invention, the lower cover 102 is made of aluminum while the fin-shaped heat dissipation module 166, corresponding in position to a heat dissipation plate of the projection module 16, is integrally formed with the lower cover 102 and bonded to the projection module 16 with a heat dissipation paste 4.

More specifically, the heat dissipation device 166 is bonded to the heat dissipation plate of the projection module 16 with a heat dissipation paste 4 having a high thermal conductivity so that heat generated by the projection module 16 is conducted rapidly through the heat dissipation paste 4 to the heat dissipation device 166 and then dissipated via the lower cover 102 into ambient air, thereby lowering the operating temperature, and extending the service life, of the projection module 16.

In conclusion, the audio/video capturing device 1 according to the present invention is provided with the projection module 16 and the audio/video module 12 integrated together so that digital audio/video signals produced by the image capturing unit 121 and the audio capturing/playback unit 122 of the audio/video module 12 through capturing an external image and an external audio signal can be projected outward and played back via the projection module 16 and the audio capturing/playback unit 122, thus simultaneously achieving the functions of a digital video camera, a digital still camera, and a projector. Furthermore, the audio/video capturing device 1 is capable of playing back digital audio/video signal files in real time and shortening the time required for image processing and transmission. Consequently, the audio/video capturing device 1 is reduced in size and weight but enhanced in portability and convenience of use.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. An audio/video capturing device having a projecting function, comprising:
a control unit, which includes a central processing unit for providing audio/video editing and playback control;
an image capturing unit, which is an optoelectronic converting device coupled with the control unit so as to capture an external image and convert the external image into a digital image signal;
an audio capturing/playback unit comprising a microphone and a loudspeaker which are configured to capture an external audio signal and play back an audio signal, respectively, and are coupled with the control unit;
an image converting unit coupled with the control unit and configured to convert an externally inputted composite video signal into a digital image signal;
an audio/video processing unit coupled with the control unit and configured to store audio/video editing software and processed digital audio/video signals;
a memory module coupled with control unit and configured to store digital audio/video data;
a memory card reading device for electrically connecting storage media of different specifications to the control unit;
a projection module for projecting the digital image signal outward;
a display module for outputting the digital image signal;
an integrated connection unit for coupling the projection module and the display module to the control unit;
an operation interface for enabling input of a control signal for controlling the control unit; and
a power module for providing electric power to the audio/video capturing device;
wherein the digital image signal produced by the image capturing unit can be projected outward by the projection module.

2. The audio/video capturing device of Claim 1, wherein the image capturing unit further comprises a lens module and an image sensing module, wherein the image sensing module senses the external image through the lens module so as to perform motion-picture photography or still photography.

3. The audio/video capturing device of Claim 1, wherein the display module is one of an LCD device and an LCD touch screen.

4. The audio/video capturing device of Claim 1, wherein the projection module comprises an LED projection unit, a beam expanding unit, a refraction unit, an imaging unit, and a projection lens, wherein a light beam is projected by the LED projection unit through the beam expanding unit and refracted by the refraction unit to the imaging unit so that the imaging unit reflects the light beam through the refraction unit along with the digital image signal produced by the image capturing unit, thus projecting the digital image signal outward through the projection lens.

5. The audio/video capturing device of Claim 4, wherein the projection module further comprises a fin-shaped heat dissipation device corresponding in position to a heat dissipation plate of the projection module, integrally formed with a lower cover of the audio/video capturing device, and bonded to the projection module with a heat dissipation paste.

6. The audio/video capturing device of Claim 5, wherein the lower cover and the heat dissipation device are made of one of aluminum, aluminum alloy, copper, and stainless steel.

7. An audio/video capturing device having a projecting function, comprising:
a control unit which includes a central processing unit for providing audio/video editing and playback control;
an image capturing unit which is an optoelectronic converting device coupled with the control unit so as to capture an external image and convert the external image into a digital image signal;
an audio capturing/playback unit comprising a microphone and a loudspeaker which are configured to capture an external audio signal and play back an audio signal, respectively, and are coupled with the control unit;
an audio/video processing unit coupled with the control unit and configured to store audio/video editing software and processed digital audio/video signals;
a memory module coupled with the control unit and configured to store digital audio/video data;
a projection module comprising an LED projection unit, a beam expanding unit, a refraction unit, an imaging unit, and a projection lens, wherein a light beam is projected by the LED projection unit through the beam expanding unit and refracted by the refraction unit to the imaging unit so that the imaging unit reflects the light beam through the refraction unit along with the digital image signal produced by the image capturing unit, thus projecting the digital image signal outward through the projection lens;
a display module for outputting the digital image;
an integrated connection unit for coupling the projection module and the display module to the control unit;
an operation interface for enabling input of a control signal for controlling the control unit; and
a power module for providing necessary electric power to the audio/video capturing device.

8. The audio/video capturing device of Claim 7, further comprising an image converting unit electrically connected to the control unit and configured to convert an externally inputted composite video signal into a digital image signal.

9. The audio/video capturing device of Claim 7, further comprising a memory card reading device for electrically connecting storage media of different specifications to the control unit.

10. The audio/video capturing device of Claim 7, wherein the image capturing unit comprises a lens module and an image sensing module, wherein the image sensing module senses the external image through the lens module so as to perform motion-picture photography or still photography.

11. The audio/video capturing device of Claim 7, wherein the projection module further comprises a fin-shaped heat dissipation device corresponding in position to a heat dissipation plate of the projection module, integrally formed with a lower cover of the audio/video capturing device, and bonded to the projection module with a heat dissipation paste.

12. The audio/video capturing device of Claim 11, wherein the lower cover and the heat dissipation device are made of one of aluminum, aluminum alloy, copper, and stainless steel.
